# EUROPÄISCHE PATENTSCHRIFT

(11) **EP 3 892 141 B1**
(45) Veröffentlichungstag und Bekanntmachung des Hinweises auf die Patenterteilung: **22.01.2025**
(21) Anmeldenummer: 21158713.4
(22) Anmeldetag: 23.02.2021
(51) Int. Cl.: A41D 13/11, A62B 23/02

(54) **ATEMMASKE UND VERFAHREN ZUR HERSTELLUNG EINER ATEMMASKE**
BREATHING MASK AND METHOD FOR MANUFACTURING SAME
MASQUE RESPIRATOIRE ET PROCÉDÉ DE FABRICATION D'UN MASQUE RESPIRATOIRE

(30) Priorität: 09.04.2020 DE 102020110057
(43) Veröffentlichungstag der Anmeldung: 13.10.2021
(73) Patentinhaber: Nitto Advanced Film Gronau GmbH, 48599 Gronau (DE)
(72) Erfinder: Trinkaus, Jan Michael, 53881 Euskirchen (DE); Wilzek, Rene, 48147 Münster (DE); Gengyi, Lin, Taicang, 215400 (CN); Brolund, Peer, 48599 Gronau (DE)
(74) Vertreter: Andrejewski - Honke Patent- und Rechtsanwälte Partnerschaft mbB

(56) Entgegenhaltungen:
- EP-A1- 2 286 878
- WO-A1-2012/137943
- WO-A1-2014/007847
- WO-A2-2013/036769
- US-A1- 2012 060 843

## Beschreibung

Die Erfindung betrifft eine Atemmaske mit einem Mittelabschnitt sowie mit einem ersten Seitenabschnitt und einem zweiten Seitenabschnitt zur Befestigung der Atemmaske an den Ohren eines Benutzers, welche entlang einer Querrichtung einander gegenüberliegend an den Mittelabschnitt anschließen, wobei eine erste Decklage sich durchgängig an dem Mittelabschnitt und den beiden Seitenabschnitten über eine entlang der Querrichtung bestimmten Gesamtbreite der Atemmaske erstreckt. Die Erfindung beschäftigt sich auch mit der Herstellung einer solchen Atemmaske.

Atemmasken sind in unterschiedlicher Form bekannt und werden im medizinischen Bereich sowie je nach Ausgestaltung auch als Staub- oder sonstiger Atemschutz eingesetzt.

Je nach Ausgestaltung können Atemmasken in Form von Atemschutzmasken nach der Norm EN 149:2001 Partikel einschließlich einer Vielzahl von Krankheitserregern fernhalten, wobei jedoch für das Ausatmen häufig öffnende Ventile vorgesehen sind, sodass ein Benutzer selbst entsprechende Partikel in einem Aerosol oder in Form von Tröpfchen abgeben kann.

Als einfacher Schutz im medizinischen Bereich sind dagegen einfache Atemmasken auf der Basis von Papier, Vlies oder einem ähnlichen Material bekannt. Beispielsweise kann bereits durch eine solche einfache Atemmaske verhindert werden, dass bei einer medizinischen Operation beim Sprechen oder Atmen Tröpfchen aus dem Mund eines Operateurs oder einer anderen beteiligten Person in die Wunde eines Patienten gelangen.

Neben dem Einsatz im medizinischen Bereich werden Atemmasken in unterschiedlicher Ausprägung häufig auch im öffentlichen Raum getragen, wobei beispielsweise für Viruserkrankungen ein gewisser Fremdschutz erreicht wird. Durch das Tragen von Atemmasken wird zumindest die Wahrscheinlichkeit einer Krankheitsübertragung vermindert, wobei selbstverständlich weitere Maßnahmen wie ein Sicherheitsabstand zwischen Personen zweckmäßig ist.

Im öffentlichen Raum ist das Tragen von Atemmasken gerade bei besonderen gesundheitlichen Belastungen wie beispielsweise Pandemien sinnvoll.

So ist es beispielsweise in dem Zeitraum 2002/2003 zu einer SARS-Pandemie gekommen, die sich aufgrund der engen weltweiten gesellschaftlichen und wirtschaftlichen Vernetzung mit Schwerpunkt in Asien ausgebreitet hat. Anfang 2020 hat das neue Corona-Virus SARS-CoV-2 eine neue, weltweite Pandemie ausgelöst. Als eine Schutzmaßnahme gerade im Hinblick auf einen Fremdschutz kann auch in solchen Situationen das Tragen von Atemmasken im privaten und öffentlichen Raum zweckmäßig sein.

Die Erfindung bezieht sich insbesondere auf einfache Einweg-Atemmasken, die nach einer einmaligen Benutzung entsorgt werden. Die Benutzung einer solchen Atemmaske als Einweg-Artikel ist besonders hygienisch, weil diese nicht mehr gewaschen oder in anderer Form gehandhabt werden muss. Bei einem solchen Einweg-Artikel sind neben guten Funktionseigenschaften und einem hohen Tragekomfort selbstverständlich geringe Material- und Fertigungskosten von besonderer Bedeutung. Entsprechende Einweg-Atemmasken sollen also aus möglichst wenig und günstigem Material in einfachen Arbeitsschritten zu großen Stückzahlen herzustellen sein.

In einer einfachen Form weisen bekannte Einweg-Atemmasken einen Mittelabschnitt zur Abdeckung von Mund und Nase auf, wobei seitlich einfache Gummibänder anschließen, um die Atemmaske an den Ohren eines Benutzers zu befestigen.

Die Herstellung einer solchen Atemmaske ist jedoch vergleichsweise aufwendig, weil mehrere verschiedene Abschnitte und Materialien miteinander kombiniert und verbunden werden müssen.

Anstelle von Gummibändern können an beiden Seiten eines Mittelabschnittes auch flächige Seitenabschnitte vorgesehen sein, die dann mit Öffnungen an den Ohren eines Benutzers befestigt werden. Aus verschiedenen Materialien für den Mittelabschnitt einerseits und die Seitenabschnitte andererseits zusammengesetzte Masken sind beispielsweise aus der EP 2 286 878 A1, der EP 2 462 992 B1, der WO 2013/036769 A2, der WO 2011/109327 A2 und der WO 2014/007847 A1 bekannt.

Eine gattungsgemäße Atemmaske mit einem über die gesamte Breite durchgängigen, mehrere Lagen aufweisenden Material ist aus der EP 1 575 388 B1 bekannt. Da eine durchgängige Materialbahn mit einer Vielzahl von Lagen genutzt wird, können mehrere Atemmasken gegebenenfalls auch mit einer angepassten Größe hintereinander und nebeneinander erzeugt werden.

Vor dem Hintergrund des bekannten Standes der Technik liegt der vorliegenden Erfindung die Aufgabe zugrunde, eine Atemmaske anzugeben, welche einfach aufgebaut ist, kostengünstig im Rahmen einer Massenproduktion hergestellt werden kann und dennoch gute Funktionseigenschaften wie insbesondere einen hohen Tragekomfort aufweist. Des Weiteren soll auch ein Verfahren zur Herstellung einer Atemmaske angegeben werden.

Gegenstand der Erfindung und Lösung der Aufgabe sind eine Atemmaske gemäß Patentanspruch 1 sowie ein Verfahren zur Herstellung einer Atemmaske gemäß Patentanspruch 17. Das Verfahren ist insbesondere dazu vorgesehen, um die Atemmaske gemäß Patentanspruch 1 zu bilden.

Die insbesondere als Einweg-Artikel vorgesehene Atemmaske umfasst einen Mittelabschnitt zur Abdeckung von Mund und Nase sowie einen ersten Seitenabschnitt und einen zweiten Seitenabschnitt, welche zur Befestigung an den Ohren eines Benutzers vorgesehen sind und welche entlang einer Querrichtung einander gegenüberliegend an den Mittelabschnitt anschließen, wobei eine erste Decklage, insbesondere aus Nonwoven, sich durchgängig an dem Mittelabschnitt und an den beiden Seitenabschnitten über eine entlang der Querrichtung bestimmte Gesamtbreite erstreckt. Durch die durchgehende Decklage wird ein hochwertiges Erscheinungsbild erreicht, wobei ausgeprägte Nähte zur Verbindung verschiedener Abschnitte vermieden werden. Die durchgehende Decklage kann auch zu einer guten, gleichmäßigen Kraftverteilung beitragen.

Davon ausgehend ist erfindungsgemäß vorgesehen, dass eine elastische Rückstelllage mit einer ersten Rückstelllagensektion und einer zweiten Rückstelllagensektion lediglich an den beiden Seitenabschnitten vorgesehen und dort insbesondere unmittelbar mit der ersten Decklage verbunden ist.

Während die erste Decklage durchgängig ist, wird eine Elastizität durch die elastischen Rückstelllagensektionen lediglich an den beiden Seitenabschnitten bereitgestellt. Durch die Seitenabschnitte mit der elastischen Rückstelllage ist dann eine Anpassung an unterschiedliche Kopfformen möglich, wobei - wie nachfolgend weiter beschrieben - die zumindest aus der ersten Decklage und jeweils einer Rückstelllagensektion gebildeten Seitenabschnitte insgesamt elastische Rückstelleigenschaften aufweisen, auch wenn die erste Decklage gemäß einer bevorzugten Ausgestaltung der Erfindung selbst keine elastischen Eigenschaften aufweist.

Die Decklage kann in diesem Zusammenhang aus einem kostengünstigen Material gebildet und auch relativ fest sein. Eine Elastizität wird dann lediglich an den Seitenabschnitten bereitgestellt. Die Erfindung liegt in diesem Zusammenhang auch die Erkenntnis zugrunde, dass gerade abhängig von der Kopfform und -größe an den Seitenteilen eine elastische Anpassung zweckmäßig ist, wobei der Mittelabschnitt auch bei unterschiedlichen Nutzern in ähnlicher Weise vor Mund und Nase angeordnet sein soll.

Im Rahmen der Erfindung wird somit eine klare Aufteilung zwischen dem Mittelabschnitt und den Seitenabschnitten erreicht, obwohl die erste Decklage als durchgängiges, einheitliches Material vorgesehen ist. Durch die elastischen Eigenschaften liegt die insbesondere als Einweg-Artikel vorgesehene Atemmaske auch bei Bewegungen des Benutzers gut an. Durch die bereitgestellte Elastizität und eine enge Anlage an den Seitenabschnitten kann auch verhindert werden, dass Luft seitlich angesaugt und ausgeblasen wird, wodurch insgesamt die Schutzwirkung reduziert sein würde.

Wie beschrieben soll der Mittelabschnitt nicht elastisch oder im Wesentlichen nicht elastisch sein und eine ausreichende Zugkraft aufweisen. Im Gegensatz zu einem insgesamt einheitlichen elastischen Material besteht dann auch nicht die Gefahr eines Verlustes der Schutzfunktion durch ein zu starkes Dehnen.

Die erfindungsgemäße Atemmaske kann günstig hergestellt werden und eignet sich zur Massenproduktion. Für eine schnelle Fertigung als Endlosbahn kann eine erste Materialbahn als erste Decklage bereitgestellt werden, wobei dann zumindest die zwei Rückstelllagensektionen beabstandet zueinander auf die Decklage aufgelegt und verbunden werden können. Im Hinblick auf eine solche Fertigung dient dann die erste Decklage gewissermaßen auch als einheitlicher Träger. Die Herstellung ist deutlich leichter, als bei einer Ausgestaltung mit separaten, seitlich aneinander anschließenden Abschnitten, die vor einer Verbindung zunächst separat voneinander in einer Maschine geführt werden müssen.

In einer einfachen Ausgestaltung besteht die Atemmaske lediglich aus der ersten Decklage und den beiden Rückstelllagensektionen, wobei üblicherweise zur Befestigung an den Ohren eines Benutzers in den Seitenabschnitten Ohröffnungen in geeigneter Größe vorgesehen sind. Auch im Hinblick auf solche Ohröffnungen kann die Elastizität des Materials von Vorteil sein, um gegebenenfalls eine Größen- und Längenanpassung zu ermöglichen.

Im Rahmen einer solchen einfachen Ausgestaltung muss die erste Decklage einerseits ausreichende Filtereigenschaften aufweisen, um einen gewissen Schutz als Atemmaske zu bewirken und andererseits eine ausreichende Zugfestigkeit aufweisen, um bei dem Tragen durch einen Benutzer und einem üblicherweise damit verbundenen elastischen Dehnen der Seitenabschnitte eine unerwünschte Auslängung des Mittelabschnittes zu vermeiden.

Zur Verbesserung der Eigenschaften der Atemmaske können auf einfache Weise noch weitere Lagen vorgesehen sein.

So ist gemäß einer bevorzugten Ausgestaltung der Erfindung vorgesehen, dass in dem Aufbau der Lagen die Rückstelllagensektionen zwischen der ersten Decklage und einer zweiten, die sich durchgängig an den Mittelabschnitt und den beiden Seitenabschnitten erstreckenden zweiten Decklage angeordnet und insbesondere in geeigneter Weise einkaschiert sind. Die Decklagen können hinsichtlich ihres Materials und ihrer Größe unterschiedlich oder besonders bevorzugt gleich ausgeführt sein. Ohne weitere optionale Maßnahmen ist dann die so gebildete Atemmaske ohne weiteres beidseitig verwendbar.

Im Rahmen der beschriebenen Ausgestaltung wird der Mittelabschnitt dann zumindest von der dort vorgesehenen ersten Decklage und der zweiten Decklage gebildet, sodass sich insgesamt durch den zumindest zweilagigen Aufbau verbesserte Filtereigenschaften ergeben. Selbstverständlich tragen dann auch beide Decklagen zu der gewünschten Zugfestigkeit des Mittelabschnittes bei.

Bei der bevorzugten Ausgestaltung mit einer ersten Decklage und einer zweiten Decklage sind dann besonders bevorzugt die beiden Rückstelllagensektionen vollständig an beiden Seiten der Atemmaske verdeckt. Bei dem Tragen der Atemmaske ergibt sich dann sowohl an der Außenseite als auch an der Innenseite eine weitgehend gleichmäßige und einheitliche Oberfläche.

Durch eine solche durchgehende oder im Wesentlichen durchgehende Oberfläche kann auch der Tragekomfort erhöht werden. Gerade in dem Übergang zwischen dem Mittelabschnitt und den Seitenabschnitten sind keine ausgeprägten Nähte vorhanden, welche Druckstellen bei einem Benutzer bilden können. Vorzugsweise sind auch die beiden Seitenabschnitte frei von solchen ausgeprägten Nähten, sodass auch dort ein hoher Tragekomfort sichergestellt wird.

Gemäß einer weiteren bevorzugten Ausgestaltung der Erfindung ist vorgesehen, dass an dem Mittelabschnitt eine Filtrationslage angeordnet ist, welche sich nur über einen Teil der in Querrichtung bestimmten Gesamtbreite der Atemmaske erstreckt. Besonders bevorzugt ist die Filtrationslage nur oder im Wesentlichen nur an dem Mittelabschnitt vorgesehen, sodass die von den Rückstelllagensektionen bereitgestellten elastischen Eigenschaften an den Seitenabschnitten nicht beeinträchtigt bzw. beeinflusst werden.

Die Filtrationslage ist an dem Mittelabschnitt gemeinsam mit der ersten Decklage und gegebenenfalls der zweiten Decklage vor Mund und Nase eines Benutzers angeordnet. Durch die Filtrationslage können dann wie nachfolgend noch weiter ausgeführt Vorgaben für das Rückhaltevermögen der Atemmaske und gegebenenfalls Vorgaben hinsichtlich einer spezifischen Schutzklasse erreicht werden.

Wenn sich die Filtrationslage bevorzugt nur an dem Mittelabschnitt oder im Wesentlichen nur an dem Mittelabschnitt erstreckt, so sind unterschiedliche Anordnungen der Filtrationslage im Bezug auf die Rückstelllagensektionen möglich. Gemäß einer ersten Variante verbleibt zwischen der Filtrationslage und den Rückstelllagensektionen ein Abstand, der beispielsweise zwischen 1 mm und 15 mm liegen kann. Gemäß einer zweiten Variante können die Filtrationslage sowie die Rückstelllagensektionen auch auf Stoß oder mit lediglich einem geringen Spalt von beispielsweise weniger als 1 mm angeordnet werden. Schließlich kann an den Rändern der Filtrationslage auch eine gewisse Überlappung zu den jeweils anschließenden Rückstelllagensektionen vorgesehen sein, wobei diese Überlappung beispielsweise in einem Bereich von 1 mm bis 15 mm liegt.

Die verschiedenen Varianten können insbesondere auch in Abhängigkeit der mechanischen Eigenschaften wie beispielsweise der Zugfestigkeit der einzelnen Lagen sowie in Abhängigkeit der Art der Verbindung zwischen den Lagen ausgewählt werden.

Eine geringfügige Überlappung in dem angegebenen Bereich kann beispielsweise dann zweckmäßig sein, wenn die erste Decklage und die gegebenenfalls vorgesehene zweite Decklage insgesamt leicht dehnbar sind und die notwendige Zugfestigkeit in Querrichtung dann im Wesentlichen von der Filtrationslage und den beiden Rückstelllagensektionen bereitgestellt wird.

Auch bei einer solchen Ausgestaltung ist jedoch grundsätzlich auch eine Anordnung auf Stoß oder mit einem Abstand möglich, wenn dann auf andere Weise gerade im Bereich des Abstandes eine Stabilisierung bewirkt wird. So können die Lagen beispielsweise mit Kaschierklebstoff kaschiert sein, der im Bereich des Abstandes zweckmäßigerweise vollflächig angeordnet ist und die gewünschte Stabilisierung bewirkt. Bei einer Kaschierung mit Kaschierklebstoff kann dieser zur Verbindung der ersten Decklage und gegebenenfalls der zweiten Decklage mit den Rückstelllagensektionen dort nur in einem Klebstoffmuster aus Linien oder Punkten aufgetragen werden. Beispielsweise wird durch einen streifenförmigen Klebstoffauftrag senkrecht zu der Querrichtung entlang einer Längsrichtung die Dehnbarkeit in Querrichtung nicht wesentlich behindert, selbst wenn der Kaschierklebstoff nicht elastisch ist und an sich eine Versteifung und Stabilisierung bewirkt.

Wie bereits zuvor dargelegt, kann durch die Auswahl der Filtrationslage das Rückhaltevermögen der Atemmaske angepasst werden. Gemäß einer bevorzugten Ausgestaltung der Erfindung weist die Filtrationslage zumindest eine Nonwoven-Schicht auf. Davon ausgehend kann die gesamte Filtrationslage von einem ein- oder mehrschichtigen Nonwoven gebildet sein. Eine Nonwoven-Schicht oder mehrere Nonwoven-Schichten können jedoch auch mit anderen Schichten kombiniert werden.

Geeignet sind beispielsweise ein Meltblown-Nonwoven bzw. ein Nonwoven mit zumindest einer Meltblown-Schicht. In Betracht kommt auch ein Nonwoven aus Stapelfasern bzw. ein Nonwoven mit zumindest einer Schicht aus Stapelfasern. Zusätzlich oder alternativ kommen für die Filtrationslage auch andere Filtermaterialien in Betracht. Geeignet sind auch papierartige Lagen auf der Basis von Zellstoff sowie andere Naturstoffe in Form eines Nonwovens oder in Form eines gewebten oder gewirkten Textils.

Die Filtrationslage kann auch eine perforierte Folie aufweisen, welche einerseits eine ausreichende Atmungsaktivität aufweist und andererseits durch die Perforation eine definierte Porengröße vorgibt.

Wenn die Atemmaske insgesamt für eine lediglich kurze Nutzungsdauer vorgesehen ist, so kann die gesamte Filtrationslage oder zumindest einzelne Schichten davon hydrophile Eigenschaften aufweisen, um Feuchtigkeit und Tröpfchen aus der Atemluft besser zu binden. Die Filtrationslage wird sich dann jedoch bei einer längeren Benutzung sukzessive vollsaugen. Vor diesem Hintergrund kann es auch zweckmäßig sein, wenn die Filtrationslage als Ganzes oder zumindest einzelne Schichten der Filtrationslage in einem gewissen Maße hydrophobe Eigenschaften aufweisen.

Schließlich können in der Filtrationslage auch weitere Komponenten und Zusatzstoffe vorgesehen sein. In Betracht kommen beispielsweise Zusatzstoffe, welche eine gewisse desinfizierende Wirkung haben können, ohne einen Benutzer zu schädigen. Beispielsweise können auch versilberte Fasern in die Filtrationslage eingebunden sein, um gewisse desinfizierende Eigenschaften zu erreichen.

Auf einfache Weise können auch andere Zusatzstoffe, beispielsweise Duftmittel, ätherische Öle oder dergleichen bereitgehalten werden. Durch solche Zusatzstoffe können bei einigen Benutzern unangenehme Empfindungen bei dem Tragen der Atemmaske, das subjektive Gefühl einer Luftknappheit oder auch andere unangenehme Eindrücke kompensiert werden.

Die erste Decklage und wenn vorgesehen auch die zweite Decklage sind vorzugsweise aus Nonwoven gebildet. Die zumindest eine Decklage ist dann nicht nur weich und anschmiegsam sondern kann eine Filterwirkung bereitstellen, wenn keine Filtrationslage vorgesehen ist oder zumindest gemeinsam mit der Filtrationslage zu einem Rückhalten von Partikeln und Tröpfchen beitragen. Geeignet können auch insbesondere Nonwoven-Materialien sein, welche auch bei der Herstellung von Windeln für eine Backsheet, einteiligen Bündchen oder ein Windelohr vorgesehen sind. Geeignet sind beispielsweise Nonwoven-Lagen mit Schichten aus Spunbond- und Meltblown-Fasern, die beispielsweise einen typischen SMS-Aufbau aufweisen können. Es kommen auch gekräuselte Spunbond-Fasern in Betracht, die sich durch eine besonders gute Weichheit und gegebenenfalls auch Dehnbarkeit auszeichnen. Auch ist beispielsweise der Einsatz von thermisch gebundenen Krempelfasern oder chemisch gebundenen Vliesen möglich. Gerade im Hinblick auf die gewünschte Zugfestigkeit des Mittelabschnittes kann es zweckmäßig sein, wenn das Nonwoven in bekannter Weise durch Wasserstrahlen, eine Vernadelung, eine Prägung oder dergleichen verfestigt ist.

Das Flächengewicht der zumindest ersten Decklage bei einer Ausgestaltung aus Nonwoven liegt typischerweise in einem Bereich zwischen 10 g/m² und 60 g/m².

Durch die Auswahl des Nonwovens können selbstverständlich auch die Filtereigenschaften eingestellt werden.

Die Rückstelllagensektionen sind gemäß einer bevorzugten Ausgestaltung der Erfindung von einer elastischen Folie gebildet, welche zumindest in Querrichtung elastisch dehnbar ist. Als Alternative zu einer elastischen Folie kommen auch beispielsweise ein elastisches Nonwoven sowie ein elastisches Gitter in Betracht. Auch bei diesen alternativen Materialien kann eine elastische Dehnbarkeit nur oder im Wesentlichen nur in Querrichtung vorgesehen sein.

Bei einer Ausgestaltung in Form einer elastischen Folie liegt die Dicke typischerweise in einem Bereich zwischen 10 µm und 60 µm, insbesondere zwischen 15 µm und 50 µm. Diese Angaben beziehen sich auf die mit der zumindest ersten Deckschicht verbundenen elastischen Folie im ungedehnten Zustand.

Die elastische Folie ist vorzugsweise ausgehend von einer Ausgangslänge um zumindest 50 % dehnbar und weist nach der elastischen Rückstellung nach einer Dehnung um 50 % eine bleibende Verformung von weniger als 30 % auf. Bei typischen elastischen Materialien, die aus dem Bereich von Hygieneartikeln bekannt sind, können jedoch auch ohne weiteres größere Dehngrenzen von beispielsweise mehr als 100 % und insbesondere mehr als 200 % sowie geringere bleibende Verformungen erzielt werden.

Die elastische Folie kann als elastisches Material insbesondere ein Styrol-Block-Copolymer oder auch ein Polyolefin-Elastomer aufweisen.

In bekannter Weise kann die elastische Folie einen mehrschichtigen Aufbau mit einer Kernschicht und zumindest einer daran anschließenden Deckschicht aufweisen. Die zumindest eine Deckschicht ist in der Praxis häufig dazu vorgesehen, um ohne ein Verblocken ein Auf- und Abrollen der elastischen Folie zu ermöglichen. Die Deckschicht kann dazu aus einem nicht-elastischen Material oder einem Material mit einer geringeren Elastizität gebildet sein. Geeignet sind hierfür insbesondere Polyolefine, wobei die Deckschicht üblicherweise nur eine geringe Dicke von beispielsweise 1 µm bis 10 µm aufweist. Durch eine nicht-elastische Deckschicht wird auch die Verarbeitung der insgesamt elastischen Folie erleichtert, weil dann zumindest bei den typischen Zugkräften in einer Fertigungsanlage keine unkontrollierte Verlängerung erfolgt.

Wie bereits zuvor erläutert, kann die insgesamt in Querrichtung notwendige Zugfestigkeit der Atemmaske auf unterschiedliche Weise bereitgestellt werden. Wenn beispielsweise die Zugfestigkeit im Wesentlichen von den Rückstelllagensektionen und der Filtrationslage - gegebenenfalls in Kombination mit Klebstoff oder weiteren Lagen - bereitgestellt wird, so kann die Decklage ohne weiteres auch dünn und leicht irreversibel dehnbar ausgestaltet sein. Eine besondere Vorbehandlung oder besondere Maßnahmen bei der Laminierung der Decklage mit den Rückstelllagensektionen sind dann gegebenenfalls nicht notwendig, um an den Seitenabschnitten die gewünschten elastischen Eigenschaften bereitzustellen.

Wenn die erste Decklage und die gegebenenfalls vorgesehene zweite Decklage jedoch bezogen auf die bei einer üblichen Benutzung auftretenden Kräfte eine erhöhte Zugfestigkeit aufweisen, so ist gemäß an einer bevorzugten Ausgestaltung der Erfindung vorgesehen, dass die erste Decklage zumindest bereichsweise mit einer Wellen- oder Faltenform an den Seitenabschnitten auf der jeweils zugeordneten Rückstelllagensektion aufliegt. Eine solche Wellen- oder Faltenform kann beispielsweise durch eine Aktivierung erreicht werden. Damit ist gemeint, dass vor einer Benutzung der Atemmaske die Seitenabschnitte vorgedehnt werden, wodurch die erste Decklage und gegebenenfalls die zweite Decklage dort verlängert und insbesondere plastisch verformt werden und/oder partiell reißen. Eine solche dem Fachmann bekannte Aktivierung kann beispielsweise durch ineinander greifende Ringrollen oder durch einen Reckrahmen erfolgen.

Eine Wellen- oder Faltenform kann alternativ auch durch ein sogenanntes Stretch-Bonding erreicht werden. Die insbesondere von einer elastischen Folie gebildeten Rückstelllagensektionen werden dann in einem in Querrichtung der Atemmaske gedehnten Zustand mit der ersten Decklage und gegebenenfalls der zweiten Decklage verbunden. Bei einem Wegfall der Zugkraft ergibt sich dann die beschriebene Wellen- oder Faltenform.

Sowohl bei einem Stretch-Bonding als auch bei einer Aktivierung wird durch die Wellen- oder Faltenform eine besonders weiche und angenehme Oberfläche erzeugt. Auch dies kann dazu beitragen, dass bei einem Benutzer Hautreizungen oder andere Hautirritationen vermieden oder zumindest reduziert werden.

Wie bereits zuvor dargelegt, können die erste Decklage und die Rückstelllagensektionen sowie gegebenenfalls weitere vorgesehene Lagen einschließlich der Filtrationslage durch Kaschierklebstoff und/oder Ultraschallschweißen miteinander verbunden werden. Dabei kommen sowohl elastische als auch nicht-elastische Kaschierklebstoffe in Betracht, wobei aus Kostengründen nicht-elastische Kaschierklebstoffe in der Regel vorteilhaft sind. Nicht-elastische Kaschierklebstoffe können auch zu einer lokalen Stabilisierung beitragen, wobei durch einen nicht-vollflächigen Auftrag in Form von Längsstreifen, Punkten oder einem ähnlichen Muster auch die elastische Rückstellung nicht behindert wird.

Bei einem Ultraschallschweißen ergibt sich der Vorteil, dass kein zusätzliches Material in Form von Kaschierklebstoff eingebracht werden muss, wodurch Kosten eingespart werden. Dabei ist auch zu berücksichtigen, dass viele Klebstoffe einen gewissen Eigengeruch aufweisen, welcher gerade bei einer Atemmaske von einem Benutzer als unangenehm empfunden werden kann. Das Ultraschallschweißen erfolgt üblicherweise mit einer Sonotrode in Kombination mit einer Erhebungen aufweisenden Gegenfläche, die beispielsweise an einer rotierenden Walze gebildet ist. An den einzelnen Erhebungen werden dann die Verbindungspunkte erzeugt.

Gerade bei dem Kaschieren einer elastischen Folie wird zum Teil die Ausbildung von Poren an den einzelnen durch Ultraschallschweißen gebildeten Verbindungsstellen beschrieben. Eine solche Ausbildung von Poren kann an den Seitenabschnitten hingenommen werden und ist dort sogar von Vorteil, um ein Schwitzen des Benutzers unter den Seitenabschnitten zu vermeiden bzw. zu reduzieren. Selbstverständlich sollen im Bereich des Mittelabschnittes Poren vermieden werden, welche aufgrund ihrer Größe die dort gewünschten Filtereigenschaften beeinträchtigen.

Wie nachfolgend noch weiter erläutert, kann ein Laminat zur Bildung der Atemmaske als Endlosbahn gebildet werden, wobei dann einzelne Atemmasken aus dieser Endlosbahn herausgetrennt oder durch eine Perforation für ein Heraustrennen vorbereitet werden. Im Rahmen bei einer solchen Ausgestaltung erstrecken sich die erste Decklage und die Rückstelllagensektion sowie bevorzugt auch alle anderen optional vorgesehenen übrigen Lagen senkrecht zu der Querrichtung über die gleiche Länge, d. h. über die gesamte Höhe der Atemmaske.

In der einfachsten Ausgestaltung wird die Atemmaske eben bzw. im Wesentlichen eben gebildet, wobei dann durch die elastische Rückstellung an den Seitenabschnitten bereits eine relativ gute Passform erreicht werden kann.

Die Passform kann auch durch die Form des Zuschnittes der Atemmaske beeinflusst werden, wobei insbesondere ausgehend von einem Kinn eines Benutzers eine sich nach oben erweiternde V-Form zweckmäßig ist. Auch der Bereich für die Nase eines Benutzers kann bei einem Ausschneiden, Ausstanzen oder Perforieren der Atemmaske aus einem Laminat besonders ausgeformt sein.

Davon ausgehend ergeben sich im Rahmen der Erfindung verschiedene Möglichkeiten, um die Passform der Atemmaske auf dem Gesicht eines Benutzers zu verbessern.

So ist gemäß einer bevorzugten Ausgestaltung der Erfindung vorgesehen, dass an einer für den Kontakt mit dem Gesicht eines Benutzers vorgesehenen Seite an dem Mittelabschnitt partiell ein hautverträglicher Klebstoff vorgesehen ist, wie er beispielsweise von medizinischen Pflastern bekannt ist. Der Klebstoff kann dazu in bekannter Weise zunächst durch ein Silikonpapier oder eine andere vergleichbare Schicht abgedeckt sein. Der Klebstoff kann beispielsweise dort vorgesehen sein, wo die Atemmaske über der Nase und insbesondere an den Nasenflügeln eines Benutzers anliegen soll. Hinsichtlich der Form einer Atemmaske ergibt sich gerade im Bezug auf die Nase als vorstehender Teil des Gesichts die Gefahr einer nicht optimalen Passform.

Zusätzlich oder alternativ kann der Mittelabschnitt zumindest bereichsweise zur Verbesserung der Passform auch in einem gewissen Maße plastisch verformt sein. Beispielsweise können wiederum für die Nase Falten durch ein Prägen oder eine Art Tiefziehen vorgeformt sein. Des Weiteren kommt es auch in Betracht, den Mittelabschnitt insgesamt durch ein Prägen oder Tiefziehen in Richtung eines Benutzers konkav auszuformen, wozu üblicherweise ein separater Umformschritt notwendig ist.

Zusätzlich oder alternativ können auch nachträglich noch Versteifungselemente, elastische Abschnitte oder dergleichen auf die erste Decklage oder je nach Ausgestaltung und Anordnung auf die zweite Decklage aufgebracht werden. Als Versteifungselemente können beispielsweise auch plastisch verformbare Elemente aufgetragen werden, die sich unter Kraftausübung an die Topologie des Gesichts, speziell des Nasenbereiches anpassen, beispielsweise Metallstreifen, die entlang der Gesichtskontur gebogen werden können. Unabhängig davon bleiben im Rahmen der Erfindung jedoch stets die flächig vorgesehene erste Decklage an dem Mittelabschnitt und den beiden Seitenabschnitten genau wie die Rückstelllagensektionen an den Seitenabschnitten erhalten.

Wie zuvor erläutert, wird durch die erste Decklage als durchgängiges Material gerade an dem Übergang von dem Mittelabschnitt zu den Seitenabschnitten dort eine ausgeprägte Verbindungsnaht vermieden.

Grundsätzlich kann die Atemmaske insbesondere innerhalb des Mittelabschnittes jedoch auch zumindest eine Konturnaht aufweisen, mit der der Mittelabschnitt für die Benutzung dreidimensional ausgeformt ist. Eine solche Konturnaht kann ohne Einschränkung als eine Art Blindnaht ausgeführt sein, bei der ausgehend von einem ebenen Zuschnitt der Atemmaske lediglich ein Bereich im gefalteten Zustand fixiert ist. Alternativ kann die Konturnaht auch als eine Verbindungsnaht ausgeführt sein, wobei dann beispielsweise bei einem zunächst ebenen Zuschnitt eine Faltung erfolgt, ein Bereich mit der Konturnaht abgesiegelt wird und dann das Material außerhalb der Konturnaht entfernt wird.

Im ungedehnten Zustand der Seitenabschnitte weist die Atemmaske typischerweise eine Gesamtbreite entlang der Querrichtung zwischen 250 mm und 500 mm, insbesondere zwischen 350 mm und 450 mm auf.

Die Breite des Mittelabschnittes beträgt üblicherweise zwischen 120 mm und 300 mm. Die Breite der Seitenabschnitte beträgt beispielsweise jeweils zwischen 50 mm und 150 mm.

Die Unterscheidung zwischen Mittelabschnitt und Seitenabschnitt erfolgt im Rahmen der Erfindung insbesondere aufgrund der Anordnung der beiden Rückstelllagensektionen. Der innere Rand der beiden Rückstelllagensektionen definiert dabei zweckmäßigerweise den Beginn des jeweiligen Seitenabschnittes.

Gegenstand der Erfindung ist auch ein Verfahren zur Herstellung einer Atemmaske, insbesondere der zuvor beschriebenen Atemmaske mit den verschiedenen optionalen Merkmalen.

Im Rahmen des Verfahrens wird eine erste Materialbahn als Decklage entlang einer Längsrichtung zugeführt. Zumindest zwei Streifen einer elastischen Rückstelllage mit geringerer Breite und einem Abstand zueinander werden derart mit der ersten Materialbahn und gegebenenfalls weiteren Materialien zu einem Laminat verbunden, dass die erste Materialbahn die zumindest zwei Streifen in Querrichtung vollständig überdeckt.

Durch ein Ausschneiden, Ausstanzen oder Perforieren aus dem so gebildeten Laminat werden Atemmasken so geformt, dass sich die Streifen der elastischen Rückstelllage bei der Atemmaske in Form von Rückstelllagensektionen an den Seitenabschnitten befinden und zwischen den Seitenabschnitten ein Mittelabschnitt ohne die elastische Rückstelllage gebildet wird.

Es versteht sich, dass entlang der Längsrichtung der Materialbahn bzw. des daraus gebildeten Laminates sukzessive Atemmasken gebildet werden können. Durch zusätzliche Streifen der elastischen Rückstelllage kann aber auch in Querrichtung mehrnutzig produziert werden, sodass die Atemmasken auch auf sehr großen Produktionsanlagen mit einer hohen Produktionsgeschwindigkeit automatisiert hergestellt werden können.

Unabhängig von einer ein- oder mehrnutzigen Fertigung entlang der Querrichtung können einzelne Atemmasken aus dem flachen Laminat erzeugt werden, wobei auch dann noch eine weitere Ausformung vor oder nach dem Ausschneiden, Ausstanzen oder Perforieren möglich ist.

Alternativ ist es auch möglich, das Laminat entlang der Längsrichtung auf sich selbst zu falten, um dann einzelne Atemmasken durch Ausstanzen, Ausschneiden oder durch eine Perforation definieren zu können. Bei einem in Querrichtung einnutzigen Laminat ist dies auch ohne die Erzeugung einer bei der Atemmaske dann mittigen Konturnaht möglich.

Die Erfindung wird im Folgenden anhand einer lediglich ein Ausführungsbeispiel darstellenden Zeichnung erläutert.

Es zeigen:
- Fig. 1: Verfahrensschritte zur Bildung eines Laminates für die Herstellung von Atemmasken,
- Fig. 2: ein solches Laminat in einer geschnittenen Perspektive, wobei eine aus dem Laminat gebildete Atemmaske angedeutet ist,
- Fig. 3: eine alternative Ausgestaltung des Laminates,
- Fig. 4: eine Draufsicht auf das Laminat mit einer ersten Ausgestaltung der Atemmaske,
- Fig. 5: ein gefalteter Abschnitt des Laminates zur Bildung einer zweiten Ausgestaltung der Atemmaske,
- Fig. 6: eine Ansicht entsprechend der Fig. 5 für eine weitere Variante der Atemmaske und
- Fig. 7: eine weitere Variante der Atemmasken.

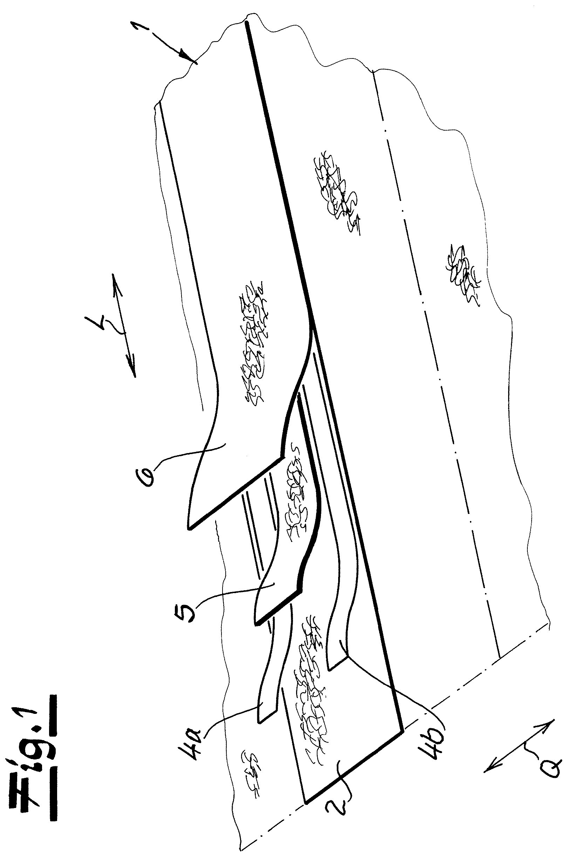

Die Fig. 1 zeigt die Herstellung eines Laminates 1, welches aus Materialstreifen unterschiedlicher Breite gebildet wird.

Dabei wird eine erste Materialbahn als erste Decklage 2 zugeführt. Sodann werden zwei Streifen einer elastischen Rückstelllage mit geringerer Breite und mit einem Abstand zueinander zugeführt und auf die erste Materialbahn aufgelegt. Die beiden Streifen der elastischen Rückstelllage bilden - wie nachfolgend weiter erläutert - bei einer aus dem Laminat 1 herausgetrennten Atemmaske 3 eine erste Rückstelllagensektion 4a und eine zweite Rückstelllagensektion 4b.

Zwischen den beiden die Rückstelllagensektionen 4a, 4b bildenden Streifen der elastischen Rückstellage wird eine weitere Materialbahn auf die erste Decklage 2 gelegt, welche bei der Atemmaske 3 eine Filtrationslage 5 bildet. Schließlich wird eine zweite Decklage 6 zugeführt und aufgelegt, wobei die zweite Decklage 6 die gleiche Breite wie die erste Decklage 2 aufweist.

Damit aus dem Laminat die Atemschutzmasken 3 gebildet werden können, sind die beiden Decklagen 2, 6 selbstverständlich in einem ausreichenden Maße luftdurchlässig. Sofern für eine bestimmte Anwendung die Schutz- und Filterwirkung alleine der Decklagen 2, 6 ausreichend ist, kann dann gegebenenfalls die Filtrationslage 5 auch weggelassen werden.

In der Fig. 1 ist angedeutet, dass bei der Produktion des Laminates 1 in einer Querrichtung Q auch mehrnutzig produziert werden kann.

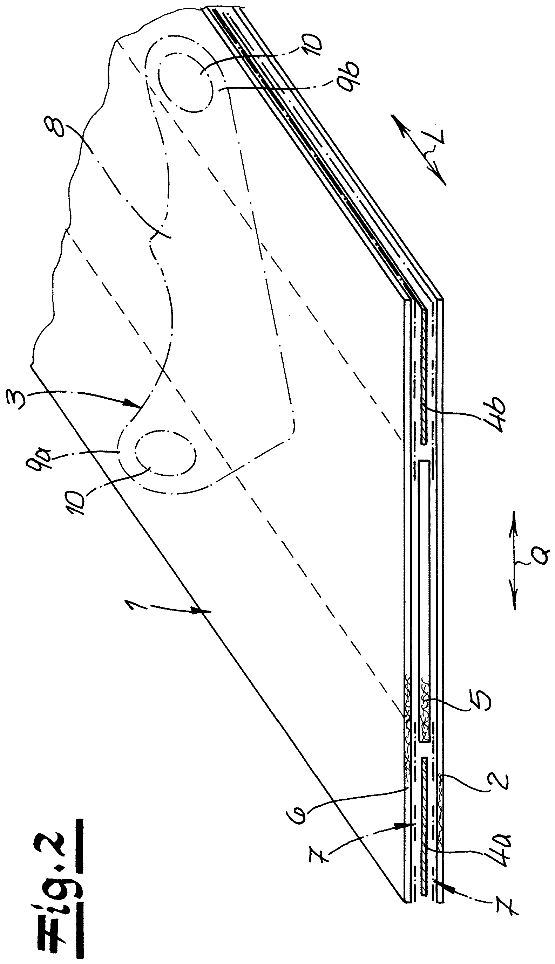

Die Verbindung der beschriebenen Komponenten des Laminates 1 erfolgt vorzugsweise durch in Fig. 2 exemplarisch dargestellten Kaschierklebstoff 7 und/oder Ultraschallverschweißen.

Die Fig. 2 zeigt in diesem Zusammenhang exemplarisch ein Klebstoffmuster, wobei ein Abstand zwischen der Filtrationslage 5 zu den jeweils angrenzenden Rückstelllagensektionen 4a, 4b durch einen breiten Streifen des Kaschierklebstoffes 7 überbrückt ist, sodass dort auch ein Zerreißen des Materials sicher vermieden werden kann. Im Bereich der von einer elastischen Folie gebildeten Rückstelllagensektionen 4a, 4b ist der Kaschierklebstoff 7 durch entlang der Längsrichtung L, die der Produktionsrichtung entspricht, verlaufende Streifen zwischen den Rückstelllagensektionen 4a, 4b und den Decklagen 2, 6 angeordnet.

Eine aus dem Laminat 1 zu bildende Atemmaske 3 weist gemäß der Fig. 2 einen Mittelabschnitt 8 zur Abdeckung von Mund und Nase eines Benutzers sowie die daran entlang der Querrichtung Q anschließende Seitenabschnitte 9a, 9b auf. In den Seitenabschnitten 9a, 9b ist jeweils eine Ohröffnung 10 vorgesehen, mit der die Atemmaske 3 auf das Gesicht eines Benutzers aufgesetzt werden kann.

Die Atemmaske 3 ist an dem Mittelabschnitt 8 zugfest und bei einer üblichen Benutzung im Wesentlichen nicht dehnbar, während an den Seitenabschnitten 9a, 9b elastische Eigenschaften bereitgestellt werden. Diese Eigenschaften können ausgehend von der Fig. 2 beispielsweise dadurch erreicht werden, dass die Filtrationslage 5 zugfest ist, während die Rückstelllagensektion 4a, 4b eine gewünschte elastische Zugfestigkeit und Rückstellung aufweisen. Die Decklagen 2, 6 können dann aus einem vergleichsweise dünnen und leicht dehnbaren Material, insbesondere einem Nonwoven gebildet sein.

Alternativ können aber auch die Decklagen 2, 6 eine hohe Zugfestigkeit in Querrichtung Q aufweisen oder zumindest zu der gewünschten Zugfestigkeit beitragen. An den Seitenabschnitten 9a, 9b kann dann im Rahmen der Erfindung die gewünschte Elastizität durch eine lokale Aktivierung mittels Ringrollen oder ein Stretch-Bonding der Rückstelllagensektion 4a, 4b bei der Herstellung erreicht werden. Wie zuvor beschrieben, kann der Kaschierklebstoff 7 dann zu einer Stabilisierung beitragen.

Bei der Ausführungsform gemäß der Fig. 2 verbleibt zwischen der Filtrationslage 5 sowie den an beiden Seiten anschließenden Rückstelllagensektion 4a, 4b ein Abstand von typischerweise zwischen 1 mm und 15 mm.

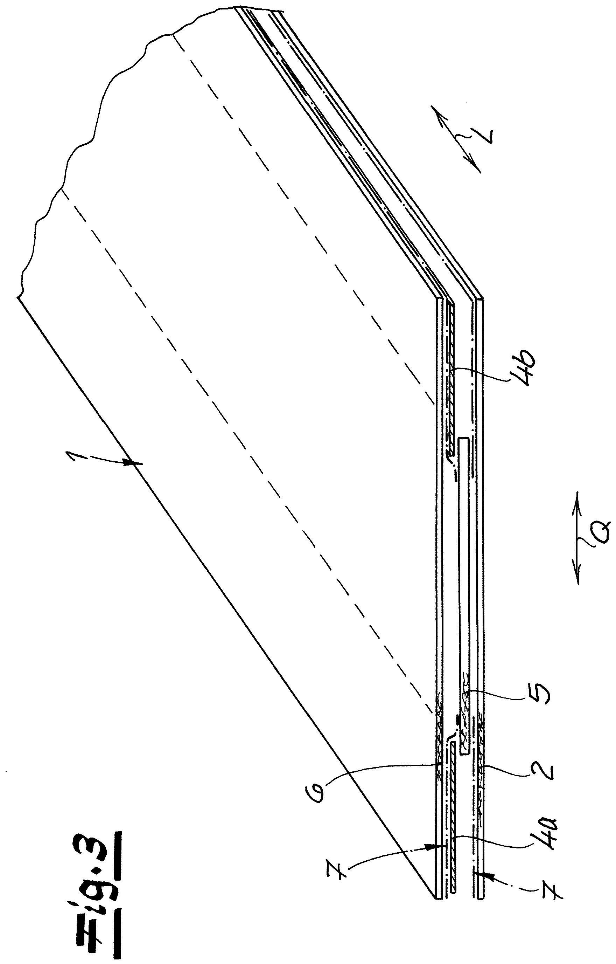

Die Filtrationslage 5 sowie die Rückstelllagensektion 4a, 4b können auch auf Stoß oder mit einem Überlapp angeordnet werden, wie es exemplarisch in der Fig. 3 dargestellt ist. Der Überlapp liegt typischerweise in einem Bereich von 1 mm bis 15 mm.

Aus den Figuren ist ersichtlich, dass durch die beiden Decklagen 2, 6 eine gleichmäßige, durchgehende und bei einer bevorzugten Ausgestaltung aus Nonwoven auch weiche Oberfläche an beiden Seiten bereitgestellt wird. Gerade an der Innenseite der Atemmaske 3 ist ein besonders weiches Nonwoven angenehm für einen Benutzer. Weicher als ein üblicher SMS-Aufbau sind beispielsweise Schichten aus einem kardierten Nonwoven, einen Spunlace-Nonwoven oder einem sogenannten High-Loft-Nonwoven mit gekräuselten Bikomponenten-Fasern. In Kombination mit den elastischen Rückstelleigenschaften an den Seitenabschnitten 9a, 9b ergeben sich ein guter Tragekomfort und eine enge Anlage der Atemmaske 3 an dem Gesicht eines Benutzers. Das Anliegen der Atemmaske 3 wird auch durch die bereits in der Fig. 2 angedeutete Form begünstigt, welche ausgehend von einem Kinnabschnitt eine sich nach oben öffnende V-Form aufweist.

Gemäß der Fig. 1 können das Laminat 1 und somit eine Vielzahl von Atemmasken 3 besonders einfach, schnell und effizient gefertigt werden.

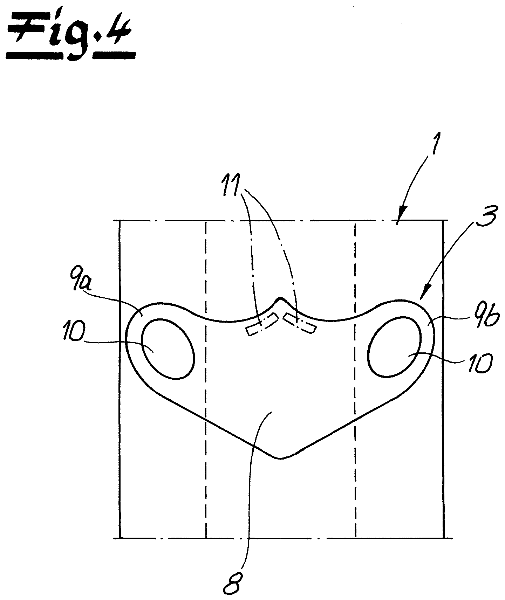

Die Fig. 4 zeigt eine einfache Ausgestaltung der Atemmaske 3, welche dann nach dem Ausschneiden aus dem Laminat 1 im Wesentlichen flach ist. Erfahrungsgemäß kann gerade die Anlage an der Nase eines Benutzers verbesserungsbedürftig sein. In diesem Zusammenhang ist in der Fig. 4 dargestellt, dass an der für den Kontakt mit dem Gesicht eines Benutzers vorgesehenen Seite an dem Mittelabschnitt 8 partiell ein hautverträglicher Klebstoff 11 vorgesehen ist, wie er auch beispielsweise von medizinischen Pflastern bekannt ist. In bekannter Weise kann der hautverträgliche Klebstoff 11 durch ein nicht dargestelltes Silikonpapier oder eine vergleichbare Trennschicht abgedeckt sein. Durch den hautverträglichen Klebstoff 11 kann der entsprechende Bereich des Mittelabschnittes 8 an den Flügel einer Nase befestigt werden.

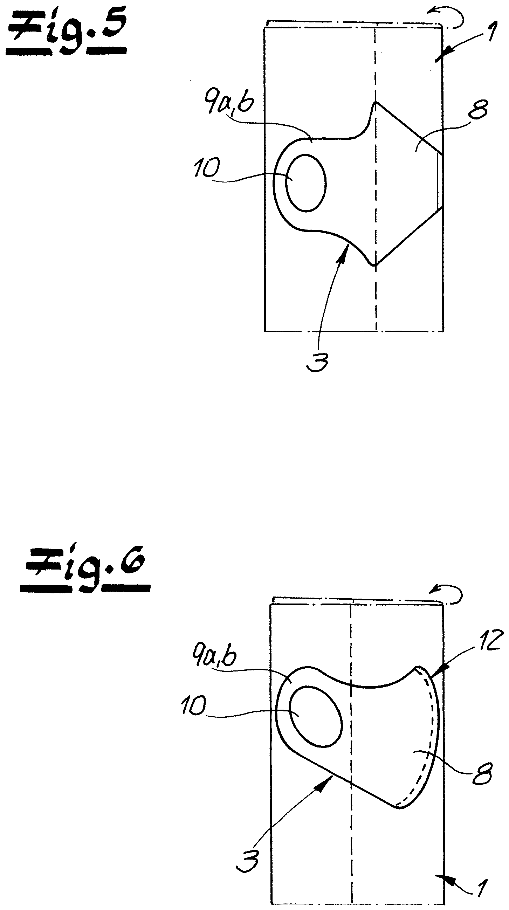

Zusätzlich oder alternativ kann gerade an dem Mittelabschnitt auch zumindest eine Konturnaht 12 vorgesehen sein. Hierzu ist in der Fig. 5 dargestellt, dass das Laminat 1 zunächst auf sich selbst gefaltet wird, wobei dann an der Faltkante, also mittig an dem Mittelabschnitt 8 eine Blindnaht erzeugt wird. Diese mittig an dem Mittelabschnitt 8 verlaufende Konturnaht 12 begünstigt dann die dreidimensionale Ausformung der Atemmaske 3 bei dem Aufsetzten auf das Gesicht eines Benutzers.

Die Fig. 6 zeigt als Weiterbildung eine Konturnaht 12, welche als Verbindungsnaht ausgestaltet ist. Wie in der Fig. 5 ist das Laminat mit einer größeren Ausgangsbreite auf sich selbst gefaltet, wobei dann in einem Abstand zu der Faltkante die Konturnaht 12 mit einem Bogen entsprechend der Wölbung eines Gesichtes gebildet wird, bevor dann die Atemmaske 3 aus dem gefalteten Laminat 1 herausgetrennt wird. Auch bei einer solchen Ausgestaltung sind die erste Decklage 2 und die zweite Decklage 6 vollflächig an dem Mittelabschnitt 8 sowie an den Seitenabschnitten 9a, 9b angeordnet.

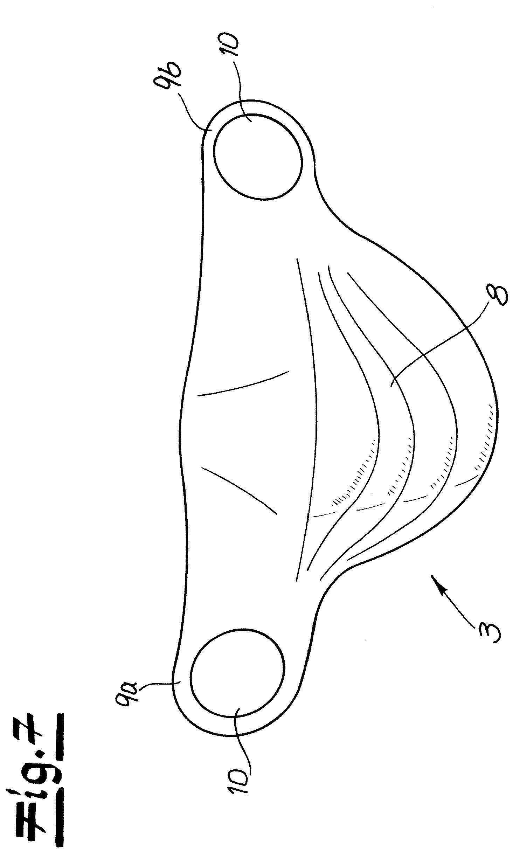

Die Fig. 7 zeigt exemplarisch eine Ausführungsform mit einer Atemmaske, die durch eine 3D-Umformung gebildet wurde. Beispielsweise kann auch durch ein einfaches Prägen eine gewisse räumliche Ausformung erfolgen.

## Patentansprüche

1. Atemmaske (3) mit einem Mittelabschnitt (8) sowie mit einem ersten Seitenabschnitt (9a) und einem zweiten Seitenabschnitt (9b), welche entlang einer Querrichtung (Q) einander gegenüberliegend an den Mittelabschnitt (8) anschließen, wobei eine erste Decklage (2) sich durchgängig an dem Mittelabschnitt (8) und den beiden Seitenabschnitten (9a, 9b) über eine entlang der Querrichtung (Q) bestimmte Gesamtbreite der Atemmaske (3) erstreckt, **dadurch gekennzeichnet, dass** eine elastische Rückstelllage mit einer ersten Rückstelllagensektion (4a) und einer zweiten Rückstelllagensektion (4b) lediglich an den beiden Seitenabschnitten (9a, 9b) vorgesehen und dort mit der ersten Decklage (2) verbunden ist.

2. Atemmaske (3) nach Anspruch 1, **dadurch gekennzeichnet, dass** die Rückstelllagensektionen (4a, 4b) zwischen der ersten Decklage (2) und einer zweiten, sich durchgängig an dem Mittelabschnitt (8) und den beiden Seitenabschnitten (9a, 9b) erstreckenden Decklage (6) angeordnet sind.

3. Atemmaske (3) nach Anspruch 1 oder 2, **dadurch gekennzeichnet, dass** an dem Mittelabschnitt (8) eine Filtrationslage (5), welche sind nur über einen Teil der Gesamtbreite erstreckt, angeordnet ist.

4. Atemmaske (3) nach Anspruch 3, **dadurch gekennzeichnet, dass** die Filtrationslage (5) von einem ein- oder mehrschichtigen Nonwoven gebildet ist bzw. zumindest ein ein- oder mehrlagiges Nonwoven umfasst.

5. Atemmaske (3) nach einem der Ansprüche 1 bis 4, **dadurch gekennzeichnet, dass** die erste Decklage (2) aus Nonwoven gebildet ist.

6. Atemmaske (3) nach einem der Ansprüche 1 bis 5, **dadurch gekennzeichnet, dass** die Rückstelllagensektionen (4a, 4b) von einer elastischen Folie gebildet sind.

7. Atemmaske (3) nach einem der Ansprüche 1 bis 6, **dadurch gekennzeichnet, dass** sich die erste Decklage (2) und die Rückstelllagensektionen (4a, 4b) senkrecht zu der Querrichtung (Q) über die gleiche Länge erstrecken.

8. Atemmaske (3) nach einem der Ansprüche 1 bis 7, **dadurch gekennzeichnet, dass** die erste Decklage (2) und die Rückstelllagensektionen (4a, 4b) durch Kaschierklebstoff (7) und/oder Ultraschallschweißen verbunden sind.

9. Atemmaske (3) nach Anspruch 8, **dadurch gekennzeichnet, dass** durch eine Verbindung durch Ultraschallschweißen gebildete Poren lediglich an den Seitenabschnitten (9a, 9b) vorhanden sind.

10. Atemmaske (3) nach einem der Ansprüche 1 bis 9, **dadurch gekennzeichnet, dass** die erste Decklage (2) mit einer Wellen- oder Faltenform an den Seitenabschnitten (9a, 9b) auf der jeweils zugeordneten Rückstelllagensektion (4a, 4b) aufliegt.

11. Atemmaske (3) nach einem der Ansprüche 1 bis 10, **dadurch gekennzeichnet, dass** der Mittelabschnitt (8) zumindest bereichsweise plastisch verformt ist.

12. Atemmaske (3) nach einem der Ansprüche 1 bis 11, **dadurch gekennzeichnet, dass** an dem Mittelabschnitt (8) zumindest eine Konturnaht (12) vorgesehen ist, mit der der Mittelabschnitt (8) für die Benutzung dreidimensional ausgeformt ist.

13. Atemmaske (3) nach einem der Ansprüche 1 bis 12, **dadurch gekennzeichnet, dass** die Gesamtbreite zwischen 250 mm und 500 mm beträgt.

14. Atemmaske (3) nach einem der Ansprüche 1 bis 13, **dadurch gekennzeichnet, dass** die Breite des Mittelabschnittes (8) zwischen 120 mm und 300 mm beträgt.

15. Atemmaske (3) nach einem der Ansprüche 1 bis 14, **dadurch gekennzeichnet, dass** die Breite der beiden Seitenabschnitte (9a, 9b) jeweils zwischen 50 mm und 150 mm beträgt.

16. Atemmaske nach einem der Ansprüche 1 bis 15, **dadurch gekennzeichnet, dass** die Seitenabschnitte (9a, 9b) Ohröffnungen (10) aufweisen.

17. Verfahren zur Herstellung einer Atemmaske (3), insbesondere nach einem der Ansprüche 1 bis 16,
a) wobei eine erste Materialbahn als erste Decklage (2) entlang einer Längsrichtung (L) zugeführt wird,
b) wobei zumindest zwei Streifen einer elastischen Rückstelllage mit geringerer Breite und mit einem Abstand zueinander zugeführt und derart mit der ersten Materialbahn zu einem Laminat verbunden werden, dass die erste Materialbahn die zumindest zwei Streifen in einer Querrichtung (Q) vollständig überdeckt
c) wobei durch ein Ausschneiden, Ausstanzen oder Perforieren aus dem Laminat Atemmasken (3) so geformt werden, dass sich die Streifen der elastischen Rückstelllage bei der Atemmaske (3) an Seitenabschnitten (9a, 9b) befinden und zwischen den Seitenabschnitten (9a, 9b) ein Mittelabschnitt (8) ohne die elastische Rückstelllage gebildet wird.

## Claims

1. Breathing mask (3) comprising a central section (8) and comprising a first side section (9a) and a second side section (9b), which adjoin the central section (8) opposite to one another along a transverse direction (Q), wherein a first cover layer (2) extends continuously on the central section (8) and the two side sections (9a, 9b) over a total width of the breathing mask (3) determined along the transverse direction (Q), **characterized in that** an elastic restoring layer with a first restoring layer section (4a) and a second restoring layer section (4b) is provided only on the two side sections (9a, 9b) and is connected there to the first cover layer (2).

2. Breathing mask (3) according to Claim 1, **characterized in that** the restoring layer sections (4a, 4b) are arranged between the first cover layer (2) and a second cover layer (6) extending continuously on the middle section (8) and the two side sections (9a, 9b).

3. Breathing mask (3) according to Claim 1 or 2, **characterized in that** a filtration layer (5) is arranged on the central section (8), which extends only over a part of the total width.

4. Breathing mask (3) according to Claim 3, **characterized in that** the filtration layer (5) is formed from a single- or multi-layer nonwoven or at least comprises a single- or multi-layer nonwoven.

5. Breathing mask (3) according to one of Claims 1 to 4, **characterized in that** the first cover layer (2) is formed of nonwoven.

6. Breathing mask (3) according to one of Claims 1 to 5, **characterized in that** the restoring layer sections (4a, 4b) are formed by an elastic film.

7. Breathing mask (3) according to one of Claims 1 to 6, **characterized in that** the first cover layer (2) and the restoring layer sections (4a, 4b) extend perpendicular to the transverse direction (Q) over the same length.

8. Breathing mask (3) according to one of Claims 1 to 7, **characterized in that** the first cover layer (2) and the restoring layer sections (4a, 4b) are connected by laminating adhesive (7) and/or ultrasonic welding.

9. Breathing mask (3) according to Claim 8, **characterized in that** pores formed by a connection by ultrasonic welding are only present on the side sections (9a, 9b).

10. Breathing mask (3) according to one of Claims 1 to 9, **characterized in that** the first cover layer (2) rests with a wave or fold shape on the side sections (9a, 9b) on the respectively associated restoring layer section (4a, 4b).

11. Breathing mask (3) according to one of Claims 1 to 10, **characterized in that** the central section (8) is plastically deformed at least in regions.

12. Breathing mask (3) according to one of Claims 1 to 11, **characterized in that** at least one contour seam (12) is provided on the central section (8), with which the central section (8) is three-dimensionally shaped for use.

13. Breathing mask (3) according to one of Claims 1 to 12, **characterized in that** the total width is between 250 mm and 500 mm.

14. Breathing mask (3) according to one of Claims 1 to 13, **characterized in that** the width of the central section (8) is between 120 mm and 300 mm.

15. Breathing mask (3) according to one of Claims 1 to 14, **characterized in that** the width of the two side sections (9a, 9b) is between 50 mm and 150 mm in each case.

16. Breathing mask according to one of Claims 1 to 15, **characterized in that** the side sections (9a, 9b) have ear openings (10).

17. Method for producing a breathing mask (3), in particular according to one of Claims 1 to 16,
a) wherein a first material web is fed as the first cover layer (2) along a longitudinal direction (L),
b) wherein at least two strips of an elastic restoring layer with a smaller width and at a distance from one another are fed and connected to the first material web to form a laminate in such a manner that the first material web completely covers the at least two strips in a transverse direction (Q)
c) wherein breathing masks (3) are formed by cutting, punching or perforating from the laminate in such a manner that the strips of the elastic restoring layer are located on side sections (9a, 9b) of the breathing mask (3) and a central section (8) without the elastic restoring layer is formed between the side sections (9a, 9b).

## Revendications

1. Masque respiratoire (3) comprenant une section centrale (8) ainsi qu'une première section latérale (9a) et une seconde section latérale (9b) qui se raccordent opposées l'une à l'autre le long d'un sens transversal (Q) sur la section centrale (8), dans lequel une première couche de finition (2) s'étend de manière traversante sur la section centrale (8) et les deux sections latérales (9a, 9b) sur une largeur totale du masque respiratoire (3) définie le long du sens transversal (Q), **caractérisé en ce qu'**une couche de rappel élastique avec une première section de couche de rappel (4a) et une seconde section de couche de rappel (4b) est prévue uniquement sur les deux sections latérales (9a, 9b) et y est reliée avec la première couche de finition (2).

2. Masque respiratoire (3) selon la revendication 1, **caractérisé en ce que** les sections de couche de rappel (4a, 4b) sont disposées entre la première couche de finition (2) et une seconde couche de finition (6) s'étendant de manière traversante sur la section centrale (8) et les deux sections latérales (9a, 9b).

3. Masque respiratoire (3) selon la revendication 1 ou 2, **caractérisé en ce qu'**une couche filtrante (5) qui s'étend uniquement sur une partie de la largeur totale, est disposée sur la section centrale (8).

4. Masque respiratoire (3) selon la revendication 3, **caractérisé en ce que** la couche filtrante (5) est formée d'un non-tissé monocouche ou multicouches, comprend respectivement un non-tissé monocouche ou multicouches.

5. Masque respiratoire (3) selon l'une des revendications 1 à 4, **caractérisé en ce que** la première couche de finition (2) est formée en non-tissé.

6. Masque respiratoire (3) selon l'une des revendications 1 à 5, **caractérisé en ce que** les sections de couche de rappel (4a, 4b) sont formées par un film élastique.

7. Masque respiratoire (3) selon l'une des revendications 1 à 6, **caractérisé en ce que** la première couche de finition (2) et les sections de couche de rappel (4a, 4b) s'étendent sur la même longueur perpendiculairement au sens transversal (Q).

8. Masque respiratoire (3) selon l'une des revendications 1 à 7, **caractérisé en ce que** la première couche de finition (2) et les sections de couche de rappel (4a, 4b) sont reliées par de l'adhésif de masquage (7) et/ou un soudage aux ultrasons.

9. Masque respiratoire (3) selon la revendication 8, **caractérisé en ce que** des pores formés par une liaison par soudage aux ultrasons sont présents uniquement sur les sections latérales (9a, 9b).

10. Masque respiratoire (3) selon l'une des revendications 1 à 9, **caractérisé en ce que** la première couche de finition (2) repose avec une forme ondulée ou pliée sur les sections latérales (9a, 9b) sur la section de couche de rappel (4a, 4b) correspondante respective.

11. Masque respiratoire (3) selon l'une des revendications 1 à 10, **caractérisé en ce que** la section centrale (8) est déformée plastiquement au moins par tronçons.

12. Masque respiratoire (3) selon l'une des revendications 1 à 11, **caractérisé en ce qu'**au moins une soudure de contour (12) est prévue sur la section centrale (8) avec laquelle la section centrale (8) est déformée de manière tridimensionnelle pour l'utilisation.

13. Masque respiratoire (3) selon l'une des revendications 1 à 12, **caractérisé en ce que** la largeur totale fait entre 250 mm et 500 mm.

14. Masque respiratoire (3) selon l'une des revendications 1 à 13, **caractérisé en ce que** la largeur de la section centrale (8) fait entre 120 mm et 300 mm.

15. Masque respiratoire (3) selon l'une des revendications 1 à 14, **caractérisé en ce que** la largeur des deux sections latérales (9a, 9b) fait respectivement entre 50 mm et 150 mm.

16. Masque respiratoire (3) selon l'une des revendications 1 à 15, **caractérisé en ce que** les sections latérales (9a, 9b) présentent des ouvertures pour les oreilles (10) .

17. Procédé de fabrication d'un masque respiratoire (3), en particulier selon l'une des revendications 1 à 16,
a) dans lequel un premier lé de matériau est amené en tant que première couche de finition (2) le long d'une direction longitudinale (L)
b) dans lequel au moins deux bandes d'une couche de rappel élastique avec une largeur plus étroite et un écart entre elles sont amenées et reliées de telle façon en un laminé avec le premier lé de matériau que le premier lé de matériau recouvre complètement les au moins deux bandes dans un sens transversal (Q)
c) dans lequel des masques respiratoires (3) sont formés à partir du laminé par une découpe, un estampage ou une perforation, que les bandes de la couche élastique de rappel se trouvent sur des sections latérales (9a, 9b) sur le masque respiratoire (3) et une section centrale (8) sans la couche élastique de rappel est formée entre les sections latérales (9a, 9b).
